# FASCICULE DE BREVET EUROPEEN

(11) **EP 0 427 622 B1**
(45) Date de publication et mention de la délivrance du brevet: **06.03.1996**
(21) Numéro de dépôt: 90403157.2
(22) Date de dépôt: 07.11.1990
(51) Int. Cl.: H04N 1/32, H04M 11/00

(54) **Procédé de gestion des appels entrant sur un télécopieur partageant une ligne téléphonique avec son poste téléphonique associé et un deuxième poste**
Verfahren zur Verwaltung ankommender Anrufe in einem Fernkopierapparat, der eine Fernsprechleitung gemeinsam mit seinem zugehörigen Telefonapparat und einem zweiten Apparat benutzt
Management method for calls entering a telecopier sharing a telephone line with its associated telephone set and a second set

(30) Priorité: 08.11.1989 FR 8914643
(43) Date de publication de la demande: 15.05.1991
(73) Titulaire: SOCIETE D'APPLICATIONS GENERALES D'ELECTRICITE ET DE MECANIQUE SAGEM, F-75783 Paris Cédex 16 (FR)
(72) Inventeur: Charbonnier, Philippe, F-78600 Maisons Laffite (FR)
(74) Mandataire: Bloch, Gérard

(56) Documents cités:
- EP-A- 0 310 001
- GB-A- 2 212 698
- US-A- 4 663 778
- US-A- 4 677 660

## Description

L'invention a trait à un télécopieur ordinaire et concerne un procédé d'exploitation de ce télécopieur et, plus particulièrement, un procédé de gestion des appels entrants.

Un télécopieur ordinaire (comme décrit, par exemple, dans les publications EP-A-0 310 001 et US-A-4 677 660) est connecté, d'une part, à une ligne téléphonique et, d'autre part, à un poste téléphonique associé. Il comprend, outre un processeur central, un module d'analyse de données et une imprimante, un modem, un bloc de commutation de la ligne téléphonique soit sur le poste associé soit sur le modem, un indicateur d'appel entrant et un détecteur de courant en série avec le poste associé.

Généralement, l'indicateur d'appel entrant est branché en parallèle sur le ligne du poste associé et le détecteur de courant est connecté en série avec le poste, entre celui-ci et l'indicateur.

Au repos, l'état du bloc de commutation est tel que le poste téléphonique est branché sur la ligne téléphonique. A partir de cet état de repos, le poste téléphonique peut prendre la ligne et un opérateur parler avec un correspondant. Grâce au détecteur de courant, la fonction télécopie peut être alors inhibée. Toujours à partir de cet état de repos, l'opérateur peut modifier l'état du bloc de commutation pour commuter sur la ligne téléphonique les organes de télécopie, émettre vers un autre télécopieur et inhiber la fonction téléphonie.

C'est quand un appel entrant arrive sur le télécopieur qu'un problème peut se poser, surtout si la ligne téléphonique du télécopieur dessert un deuxième poste téléphonique éloigné du télécopieur, comme ce peut être le cas dans une maison particulière où ce deuxième poste serait placé à un étage différent de celui du télécopieur et que la ligne téléphonique doit donc être partagée entre les deux postes téléphoniques et les organes de télécopie. C'est un cas de faible débit de pages à télécopier.

Dans les installations connues, ce deuxième poste éloigné est branché en parallèle sur le premier poste associé au télécopieur. Au repos, ce deuxième poste peut donc également prendre la ligne et un opérateur, à l'aide de ce deuxième poste, parler avec un correspondant.

Le poste téléphonique associé au télécopeiur sert à établir manuellement les communications enfonction télécopie si le télécopieur n'est pas équipé d'un numéroteur automatique ou s'il faut passer par une opératrice. Mais les deux postes téléphoniques servent à téléphoner de façon normale quand le télécopieur ne fonctionne pas en tant que tel.

Quand un appel entrant arrive sur le télécopieur, l'indicateur d'appel le détecte et fait retentir une sonnerie. Si un opérateur décroche le combiné du poste associé alors qu'il s'agit d'un appel télécopie, il peut appuyer sur une touche accessible sur le télécopieur pour provoquer le démarrage de la fonction télécopie. Mais si un opérateur décroche le combiné du poste secondaire, l'actionnement de la touche de démarrage n'est alors plus possible.

On a déjà proposé, si le combiné du poste secondaire, à la suite d'un appel entrant, est décroché, et par détection par le détecteur de courant, de mettre le télécopieur en écoute silencieuse et parallèle et, s'ils'agit d'un appel télécopie, de faire émettre par l'opérateur, qui s'en aperçoit, un signal DTMF (dual tone multifrequency) reçu et reconnu par des filtres programmables du modem - ce qui implique que le poste secondaire soit adapté en conséquence-, pour télécommander, après le raccroché du combiné, le passage du télécopieur en communication télécopie.

En effet, l'établissement de la communication télécopie ne doit pas être immédiat, l'appel entrant pouvant très bien être un appel téléphonie. Dans ce cas, l'opérateur ayant décroché le combiné du poste secondaire poursuit en communication téléphonique.

Toutefois, dans les installations connues telles que définies ci-dessus, la mise en écoute silencieuse et parallèle des organes de télécopie nécessite une adaptation structurelle non négligeable.

La présente invention vise à s'affranchir des éléments matériels d'adaptation.

A cet effet, la présente invention concerne un procédé de gestion des appels téléphonie et télécopie entrant sur un télécopieur ordinaire connecté à une ligne téléphonique partagée avec un poste téléphonique associé et un poste téléphonique secondaire à numérotation de type DTMF, le télécopieur comprenant, outre un processeur central, un module d'analyse de données et une imprimante, un modem, un bloc de commutation de la ligne téléphonique soit sur le poste associé soit sur le modem, un indicateur d'appel entrant et un détecteur de courant en série avec le poste associé, procédé dans lequel, si le combiné du poste secondaire, à la suite d'un appel entrant, est décroché, le télécopieur est mis en écoute silencieuse et parallèle et, s'il s'agit d'un appel télécopie, un signal reçu par le modem du télécopieur commande le passage du télécopieur en communication télécopie, procédé caractérisé par le fait qu'on branche le poste secondaire directement en parallèle sur la ligne téléphonique et que le télécopieur est mis en écoute silencieuse et parallèle quand le combiné du poste secondaire, à la suite d'un appel entrant, est décroché avant la fin d'une période prédéterminée d'émission des signaux de l'indicateur d'appel au terme de laquelle le télécopieur prendrait sinon la ligne et que ledit signal reçu par le modem peut être émis par ledit autre télécopieur émetteur ou par le poste secondaire à numérotation DTMF.

En d'autres termes, l'écoute parallèle du télécopieur en attente de passage éventuel en communication télécopie, dans le procédé de l'invention, est déclenchée par une sonnerie d'appel avortée et c'est là une caractéristique importante de ce procédé.

En outre, le montage du poste secondaire en parallèle sur la ligne téléphonique, en amont du télécopieur, procure un avantage tout aussi important puisque, pour le passage du télécopieur en communication télécopie, soit par l'émission depuis le poste secondaire d'un signal DTMF de télécommande reçu et reconnu par le modem, soit, comme souvent c'est le cas, par la réception, par ce modem, d'un signal à fréquence prédéterminée - généralement 1100 Hz - émis par le télécopieur émetteur, il permet de s'affranchir de tout équipement d'adaptation, le signal DTMF parvenant directement au modem par la ligne téléphonique et le bloc de commutation préalablement commuté par la sonnerie d'appel avortée.

Dans la mise en oeuvre préférée du procédé de l'invention, le télécopieur est mis en écoute silencieuse quand le combiné du poste secondaire est décroché avant la fin du deuxième train de signaux de l'indicateur d'appel et, ce, pendant une durée maximale prédéterminée, avantageusement trente secondes, au-delà de laquelle le télécopieur est remis à l'état de repos.

L'invention sera mieux comprise à l'aide de la description suivante d'une installation de télécopie ordinaire, à un poste associé et un poste secondaire, et du procédé de gestion des appels entrants de l'invention, en référence aux dessins annexés, sur lesquels
- la figure 1 représente une vue synoptique de l'installation de télécopie et
- la figure 2 représente un bloc-diagramme fonctionnel du procédé de fonctionnement de l'installation de télécopie.

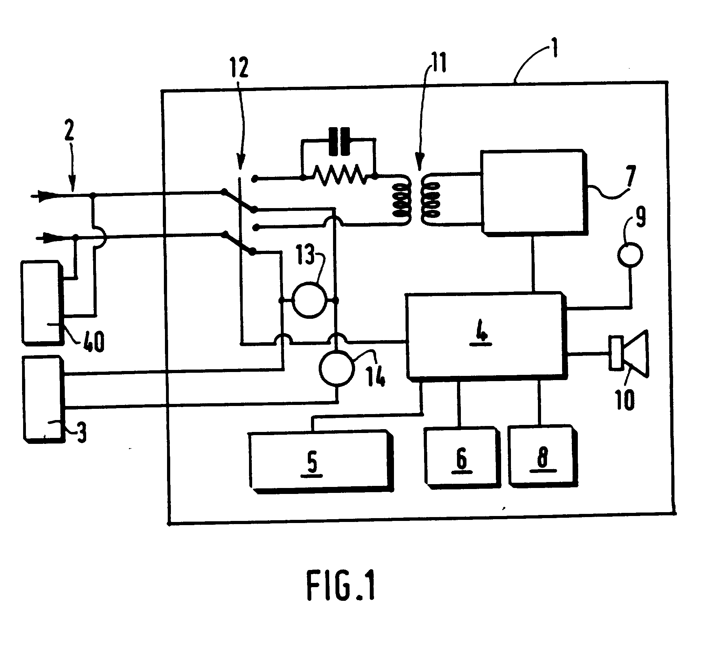

Le télécopieur 1 de la figure 1 est connecté à une ligne téléphonique 2 et à un poste téléphonique associé 3. Un poste secondaire 40 partage la ligne 2 avec le télécopieur 1 et le poste associé 3. Le télécopieur comporte un processeur central 4 relié à un module d'analyse de données, ou scanner, 5, à une imprimante 6 et à un modem 7. Le processeur 4 est également associé à un module 8 de reconnaissance de la nature des appels entrants, à une touche 9 de reprise téléphonique entre pages et à un transducteur électro-acoustique 10.

Le modem, en l'espèce du type R96 de la Société Rockwell, est branché aux bornes de l'enroulement secondaire d'un transformateur 11 et comporte des filtres programmables pouvant être utilisés par le processeur 4 pour la mise en oeuvre de la fonction d'aiguillage téléphonie-télécopie.

Le transducteur 10 peut être du type ronfleur, ou "buzzer", ou être, comme en l'espèce considérée, un haut-parleur.

Le module de reconnaissance 8 peut être agencé pour reconnaître la fréquence 1100 Hz des télécopieurs à numéroteur automatique.

La ligne téléphonique 2 pénètre dans le télécopieur 1 et peut être dirigée soit vers le modem 7 soit vers le poste téléphonique associé 3 par un commutateur 12 commandé par le processeur 4. Un indicateur d'appel, ou détecteur de sonnerie, 13 est branché en parallèle sur le poste téléphonique 3 et un détecteur de courant 14, permettant de déterminer si le poste est en ligne ou au repos, est connecté en série avec le poste, entre celui-ci et l'indicateur 13. L'indicateur 13 comporte essentiellement un photocoupleur associé à des moyens, dans le processeur 4, d'appréciation des paramètres du signal, comme par exemple sa fréquence. Le détecteur 14 comporte essentiellement une paire de photocoupleurs associés à d'autres moyens dans le processeur 4 permettant de déterminer si le combiné du poste téléphonique 3 est décroché ou non.

S'agissant d'un télécopieur ordinaire, il ne sera pas décrit plus en détail.

Le poste secondaire 40 est à numérotation de type DTMF et il est branché en parallèle sur la ligne téléphonique 2, en amont du télécopieur 1. A partir du poste 40, un opérateur peut donc téléphoner de façon tout-à-fait normale quand le télécopieur 1 ne fonctionne pas en tant que tel.

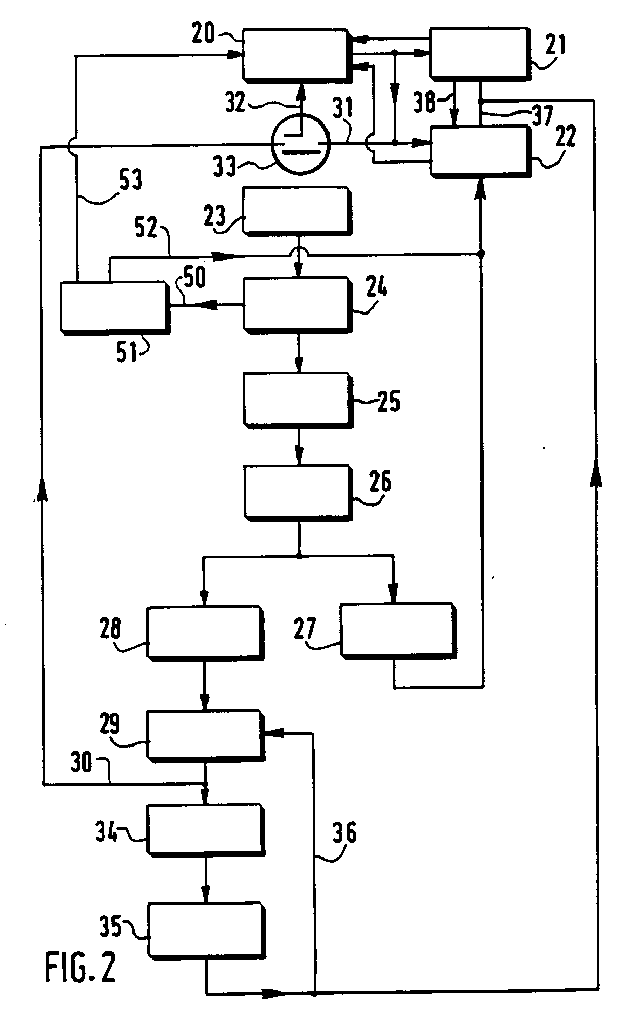

A l'état de repos, le commutateur 12 du télécopieur 1 est dans la position qui connecte la ligne 2 au poste téléphonique 3. En référence à la figure 2, à partir de l'état de repos (20), le poste associé 3 peut être en ligne et inhiber la fonction télécopie (21) ou, alternativement, le télécopieur peut prendre la ligne (22). Le télécopieur peut revenir dans cet état de repos depuis chacun de ces deux états de communication (21,22). Quand un appel entrant arrive sur le télécopieur (23), il est détecté (24) par le détecteur de sonnerie 13.

Après, ici, deux trains de signaux du détecteur 13, le télécopieur, dans l'exemple considéré de mise en oeuvre du procédé de l'invention, prend la ligne 2 (25) et le module de reconnaissance 8 identifie (26) l'appel qui peut être un appel télécopie ou un appel téléphonie. S'il s'agit d'un appel télécopie (27), le télécopieur passe à l'état de communication télécopie (22). S'il s'agit d'un appel téléphonie (28), le télécopieur passe à l'état alerte opérateur (29) en simulant une sonnerie sur le transducteur 10, ici d'une durée maximale d'une minute. Si l'opérateur est absent (30), c'est-à-dire loin du télécopieur 1 et du poste associé 3, soit la fonction télécopie est mise en marche (31), soit le télécopieur 1 raccroche (32), l'alternative étant illustrée sur la figure 2 par le circulateur 33.

Si l'opérateur est présent (34), il lui suffit de décrocher le combiné du poste 3 et d'appuyer sur la touche 9 de reprise téléphonique entre pages (35) pour mettre le poste associé 3 en ligne (21) et arrêter (36) le fonctionnement du transducteur 10.

On notera que les liaisons 37, 38 représentées entre les étants de communication téléphonie et télécopie 21, 22 de la figure 2 illustrent respectivement la fonction de reprise téléphonique entre pages et l'ordre subséquent de remise en oeuvre de la fonction télécopie.

Si, avant la fin du deuxième train de signaux du détecteur 13, l'opérateur se trouvant à proximité du poste secondaire 40, celui-ci décroche son combiné (50), l'arrêt de la sonnerie du détecteur 13 provoque la commutation du bloc de commutation 12 et la mise en écoute parallèle et silencieuse (51) du télécopieur 1.

S'il s'agit d'un appel téléphonie, l'opérateur poursuit en communication téléphonie.

S'il s'agit d'un appel télécopie, l'opérateur s'en aperçoit, soit le module de reconnaissance 8, par l'intermédiaire du modem 7, reconnaît la fréquence 1100 Hz du télécopieur émetteur à numérotation automatique, soit l'opérateur provoque, par numérotation sur le combiné du poste secondaire 40, l'émission (52) d'un signal DTMF de télécommande également reçu par le modem 7, et le télécopieur 1 passe en communication télécopie (22).

Si le télécopieur émetteur n'est pas à numérotation automatique et que, ici, au bout de trente secondes, l'opérateur n'a pas provoqué (53) l'émission du signal DTMF de télécommande, le télécopieur est remis à l'état de repos (20).

## Revendications

1. Procédé de gestion des appels téléphonie et télécopie entrant sur un télécopieur ordinaire (1) connecté à une ligne téléphonique (2) partagée avec un poste téléphonique associé (3) et un poste téléphonique secondaire (40) à numérotation de type DTMF, le télécopieur (1) comprenant, outre un processeur central (4), un module d'analyse de données (5) et une imprimante (6), un modem (7), un bloc (12) de commutation de la ligne téléphonique (2) soit sur le poste associé (3) soit sur le modem (7), un indicateur (13) d'appel entrant et un détecteur de courant (14) en série avec le poste associé (3), procédé dans lequel, si le combiné du poste secondaire (40), à la suite d'un appel entrant, est décroché (50), le télécopieur (1) est mis en écoute silencieuse et parallèle (51) et, s'il s'agit d'un appel télécopie d'un autre télécopieur émetteur, un signal reçu par le modem du télécopieur commande (52) le passage du télécopieur en communication télécopie (22), procédé caractérisé par le fait qu'on branche le poste secondaire (40) directement en parallèle sur la ligne téléphonique (2), que le télécopieur (1) est mis en écoute silencieuse et parallèle (51) quand le combiné du poste secondaire, à la suite d'un appel entrant, est décroché (50) avant la fin d'une période prédéterminée d'émission des signaux de l'indicateur d'appel (13) au terme de laquelle le télécopieur prendrait sinon la ligne et que ledit signal reçu par le modem peut être émis par ledit autre télécopieur émetteur ou par le poste secondaire à numérotation DTMF.

2. Procédé de gestion selon la revendication 1, dans lequel le télécopieur (1) est mis en écoute silencieuse et parallèle (51) quand le combiné du poste secondaire (40) est décroché avant la fin du deuxième train de signaux de l'indicateur d'appel (13).

3. Procédé de gestion selon l'une des revendications 1 et 2, dans lequel, au-delà d'une durée prédéterminée (53) d'écoute silencieuse et parallèle (51) du télécopieur (1), celui-ci est remis à l'état de repos (20).

## Patentansprüche

1. Verfahren zur Verwaltung von Telefon- und Telefaxanrufen, die bei einem Fernkopierer (1) ankommen, der an eine Telefonleitung (2) angeschlossen ist, die gemeinsam von einem zugeordneten Fernsprechanschluß (3) und einem zweiten Fernsprechanschluß (40) mit Wählmodus vom DTMF-Typ genutzt wird, wobei der Fernkopierer (1) ferner einen zentralen Prozessor (4), einen Modul (5) zur Datenanalyse und einen Drucker (6), ein Modem (7), einen Block (12) zum Umschalten der Telefonleitung (2) entweder auf den zugeordneten Fernsprechanschluß (3) oder das Modem (7), einen Anzeiger (13) für ankommende Anrufe und einen Stromdetektor (14) aufweist, der mit dem zugeordneten Fernsprechanschluß in Reihe geschaltet ist, wobei in dem Verfahren dann, wenn der Handapparat des zweiten Fernsprechanschlusses (40) infolge eines ankommenden Anrufes abgenommen wird (50), der Fernkopierer (1) in eine Stumm- und Parallelschaltung (51) gebracht wird, und dann, wenn es sich um einen Telefaxanruf eines anderen Sende-Fernkopierers handelt, ein von dem Modem des Fernkopierers empfangenes Signal den Durchgang der Telefaxverbindung (22) von dem Fernkopierer steuert (52), dadurch gekennzeichnet,
daß der zweite Fernsprechanschluß (40) direkt parallel an die Telefonleitung (2) angeschlossen wird,
daß der Fernkopierer (1) in eine Stumm- und Parallelschaltung (51) gebracht wird, wenn der Handapparat des zweiten Fernsprechanschlusses infolge eines ankommenden Anrufes vor dem Ende eines vorgegebenen Zeitraumes der Aussendung von Sendesignalen des Anrufanzeigers (13) abgenommen wird (50), nach dessen Ablauf anderenfalls der Fernkopierer auf Empfang gehen würde,
und daß das von dem Modem empfangene Signal entweder von einem anderen Sende-Fernkopierer oder von dem zweiten Fernsprechanschluß mit Wählmodus vom DTMF-Typ gesendet werden kann.

2. Verfahren nach Anspruch 1,
bei dem der Fernkopierer (1) in eine Stumm- und Parallelschaltung (51) gebracht wird, wenn der Handapparat des zweiten Fernsprechanschlusses (40) vor dem Ende des zweiten Signalzuges des Anrufanzeigers (13) abgenommen wird.

3. Verfahren nach Anspruch 1 und 2,
bei dem der Fernkopierer (1) nach Ablauf einer vorgegebenen Dauer (53) der Stumm- und Parallelschaltung (51) in den Ruhezustand (20) zurückversetzt wird.

## Claims

1. Method for the management of telephone and facsimile calls coming in an ordinary facsimile machine (1) connected to a telephone line (2) shared with an associated telephone handset (3) and a secondary telephone handset (40) with dialling of the DTMF type, the facsimile machine (1) comprising, apart from a central processor (4), a data analysis module (5) and a printer (6), a modem (7), a unit (12) for switching from the telephone line (2) either to the associated handset (3) or to the modem (7), an incoming call indicator (13) and a current detector (14) in series with the associated handset (3), a method in which, if the receiver of the secondary handset (40), following an incoming call, is lifted (50), the facsimile machine (1) is switched to silent and parallel listening (51) and, if it is a facsimile call from another transmitting facsimile machine, a signal received by the modem of the facsimile machine controls (52) the passage of the facsimile machine into facsimile communication (22), which method is characterised by the fact that the secondary handset (40) is connected directly in parallel to the telephone line (2), that the facsimile machine (1) is switched to silent and parallel listening (51) when the receiver of the secondary handset, following an incoming call, is lifted (50) before the end of a predetermined period of transmission of signals from the call indicator (13), at the end of which the facsimile machine would otherwise occupy the line and that said signal received by the modem may be transmitted by said other transmitting facsimile machine or by the secondary handset with DTMF dialling.

2. Management method according to Claim 1, in which the facsimile machine (1) is switched to silent and parallel listening (51) when the receiver of the secondary handset (40) is lifted before the end of the second set of signals from the call indicator (13).

3. Management method according to one of Claims 1 and 2, in which, beyond a predetermined period (53) of silent and parallel listening (51) of the facsimile machine (1), the latter is restored to the inoperative state (20).
